# EUROPEAN PATENT SPECIFICATION

(11) **EP 2 132 012 B1**
(45) Date of publication and mention of the grant of the patent: **13.04.2011**
(21) Application number: 08723963.8
(22) Date of filing: 25.02.2008
(51) Int. Cl.: B27G 11/00, C09J 5/02, C09J 5/04, C09J 5/06

(54) **IMPROVED METHOD FOR GLUING**
VERBESSERTES KLEBVERFAHREN
PROCÉDÉ DE COLLAGE AMÉLIORÉ

(30) Priority: 23.02.2007 NO 20071036
(43) Date of publication of application: 16.12.2009
(73) Proprietor: Dynea OY, 00530 Helsinki (FI)
(72) Inventor: MØRLAND, Einar, N-0659 Oslo (NO); BREDESEN, Ronny, N-1476 Rasta (NO)
(74) Representative: Balle, Morten
(86) International application number: PCT/NO2008/000069
(87) International publication number: WO 2008/103055

(56) References cited:
- EP-A- 1 190 823
- US-A- 4 941 521
- US-A- 5 674 338

## Description

### The field of invention

The present invention relates to the field of curing /setting adhesives for gluing of wood and wood based products. More specifically, the invention relates to a method of curing / setting of adhesives for gluing of wood based or wooden products.

### Background of the invention

In production of wooden or wood based products, e.g. laminated products such as laminated beams, I-beams, parquet, form bent laminates, foliated products etc., an adhesive is applied to one or both surfaces to be joined, followed by a pressing step. Normally, heat is applied during the pressing step to accelerate the curing of the adhesive.

A challenge for the manufacturers of adhesives, is to provide solutions that allows a maximum pot life of the adhesive where mix-in applications are used, and an acceptable assembly time, combined with a short curing time. The pot life of adhesive system is the time from mixing of hardener and resin to make an adhesive that is ready for use, until the viscosity of the mixed adhesive is too high for application/ handling or that the reactive component of the hardener has reacted with other components in the glue mix.

In the case of separate application of the adhesive and hardener, the glue and hardener starts to react first at the time when they are applied on the surface(s) to be glued. Hence the limitations set by the limited pot life are removed. However the relation between maximum assembly time and short curing time is the same as for mix-in application. In the case of one-component systems the same requirements regarding assembly time and pressing time are valid. The assembly time is the time from the adhesive is applied to a surface until press, and optionally heat, is (are) applied. The curing time is the time from the pressure is applied, until sufficient dry strength is formed in order to remove the pressure. During this operation heat can be applied in order to reduce the pressing time. Methods for applying heat could be direct contact heating from a hot press, heating by hot air, or heating the glue line or the wood using radio frequency presses or microwaves or any other method in order to increase the temperature. The needed pressing time is decided by the time at a given temperature to build up sufficient dry strength allowing further handling/treatment. Full dry strength and water resistance is normally reached some time after the pressing operation.

The curing speed of amino resins and other chemically hardening resins is strongly dependent on the curing temperature and the curing speed increases exponential relative to the increase of temperature. Water based emulsion adhesives, such as polyvinyl acetate adhesives and emulsion polymer isocyanate adhesives, on the other side, harden by removal of water from the glue line.

WO2004/104123, which is included herein as reference, relates to the use of heat to reduce water content in an adhesive based on water-based emulsions, such as polyvinyl acetate adhesives or emulsion polymer isocyanate adhesives, or water based resins of amino- or phenolic type. Adhesive is applied to a first surfaced to be glued and heat is applied to the adhesive to heat and partly dry out the adhesive. The first surface is thereafter brought together with the second adhesive free, surface before pressing the two surfaces together to finalize the pressing sequence. This method is, however, dependent on a uniform substrate and a uniform film thickness of the applied adhesive. Varying substrate and/or film thickness may result in uneven moisture content in the partly dried adhesive, causing unevenness in the gluing result. Only small variations in the process parameters may cause dramatic reduction in gluing quality, and give bad gluing resulting in e.g. delamination. Accordingly it is extremely difficult to achieve acceptable results by this method. Additionally, the surfaces to be glued have to be assembled within a short time after the drying to avoid that the adhesive film dries up and is destroyed. A short stop in the production may therefore cause scraping of the lamellas on which the adhesive has been applied.

EP 1 190 823 relates to a method and apparatus for joining wood blocks together, in which method the adhesive is applied to one of the surfaces to be joint. Thereafter both the surfaces to be glued are heated. The adhesive film is heated to a temperature in the range of 40 to 90°C and the opposite to a temperature higher than 100°C, exemplified with 140 °C. The heating and drying of the adhesive film will give the same problems as described above. The fact that both surfaces is heated and are heated to different temperatures, adds complexity to the process and apparatus.

FI B103490 relates to a method of wood blocks where the surfaces to be joined are heated to store heat in the substrate. The surfaces are cyclically heated to avoid that the surfaces are put to fire. The method causes discoloration and undesirable drying of the wooden substrate. Additionally, the gluing has to be performed shortly after heating for the heat to accelerate the hardening of chemically hardening adhesives. A short stop in the production makes it necessary to heat the substrate again as it cools relatively fast.

US 5.144.822 relates to a method of gluing wooden products to produce laminated products, wherein substrates are heated by mans of steam, the steam hated surface is heated further by high frequency electricity over electrodes arranged in the path of the wooden substrates before the heated substrates are brought together with surfaces on which adhesive is applied. The heat of the heated substrates ensures rapid hardening for chemically hardening adhesives.

An objective of the present invention is therefore to provide an improved method for gluing by means of a water based adhesive composition, such as Emulsion Polymer Isocyanate (EPI), Polyvinyl Acetate (PVAc), Urea Formaldehyde (UF), Melamine Urea Formaldehyde (MUF), Melamine Formaldehyde (MF), and Phenol Resorcinol Formaldehyde (PRF) adhesive systems, preferably EPI and PVAc adhesive systems, avoiding the shortcomings of the prior art methods.

### Summary of the invention

According to the present invention there is provided a method of joining a first and a second substrate of wood based materials according to claim 1, the method comprises the steps of:
- applying a water based adhesive composition onto a first surface of said first substrate,
- drying a surface layer of a second surface of the second substrate,
- bringing together the first surface and a second surface of the second substrate,
   and
- pressing the two surfaces against each other until an initial bonding is established.

The drying of the second substrate prepares the second substrate for absorbing water from the water based adhesive for thus removing water from the glue line to accelerate the formation of an initial bonding having a sufficient handling strength. Drying of the substrate as such below the moisture in the intended environment of use, may cause formation of unwanted stress and dimension stability of the glued product. Removal of moisture in surface layer is preferred as it brings about a sufficient capacity for absorption of water from the glue line at the same time as it does not remove too much water from the wooden substrate.

The surface layer having a thickness of 0,05 to 3 mm of said second substrate is dried.

The moisture content at surface of said second surface is below 3 % and preferably below 1% before said first and second surfaces are brought together.

According to a second embodiment, the first substrate is dried before application of adhesive. Removal of water from the first substrate will add absorption capacity for water from the glue line.

According to the second embodiment, the moisture content at surface of said first surface is preferably below 5%, more preferably below 3 % and most preferably below 1% before the adhesive is applied to said first surface.

Preferably the substrate(s) is (are) dried for a time from about 10 seconds to about 30 minutes, more preferably from about 20 seconds to about 10 minutes. A short drying time is important to allow drying of the surface layer at the same time as a drying of the core of the substrate is avoided.

It is preferred that the substrate(s) is (are) dried by means of heat. During the drying by means of heat the surface(s) is (are) dried by heating to a temperature of 50 to about 400 °C, more preferably from about 100 to about 300 °C, such as e.g. from about 125 to about 250 °C, such as from about 150 to about 200 °C. The surface temperature of the substrate during the process of drying is preferably so high that the drying is accelerated compared with drying at the ambient temperature, and not so high that carbonization or other damages occurs at the surface. The preferable temperature may vary within the above indicated limits depending on the intended drying time, the substrate, the original humidity of the substrate and the intended resulting humidity. The optimal temperature may be found by the skilled man in the art without undue experimentation.

The surface(s) is (are) in a preferred embodiment, heated by means of one or more IR lamp(s). IR lamps provide a simple and easy to control way of heating the wooden substrates.

### Detailed description

The present invention is based on the fact that water based adhesives such as EPI, PVAc, UF, MUF, MF and PRF adhesives, may be fully or at least partly hardened or set and may establish a bonding to a substrate having at least an initial strength or handling strength, by removal of water from the glue line. This effect by removal of water is most pronounced for EPI and PVAc but is also present for the other mentioned adhesive systems.

When gluing two wood based substrates by means of the above mentioned adhesives, the adhesive is applied to a first surface on a first substrate. The first surface is then brought in contact with a second surface of a second substrate and the two surfaces are forced together by some pressing means until a bonding having a handling strength is established between the two surfaces. The handling strength of a glue line is the strength that allows the pressing means to be removed so that the glue line may be after cured without pressing. The handling strength may thus vary depending on how the product is to be handled after removal from the pressing means. The glued product may thereafter rest in a period sufficient to allow the glue line to after cure to get a final strength. The after curing can take from minutes to days depending on the adhesive type and the conditions during the after curing.

Depending on the field of use and the raw materials, the moisture of the wood based substrates to be glued may vary from about 18 % for e.g. glulam, and to about 3 % for veneer for some applications in the furniture industry. Normal moisture content for production of glulam is about 12 %, whereas normal moisture content for the furniture industry may be about 6%.

According to the present invention, adhesive is applied to the first surface of the first substrate, whereas the second substrate is completely or partly dried before the surfaces are brought together. Depending on the application of the glued product and on the thickness of the second substrate, it may be preferred to dry only the outer surface layer of the second substrate, e.g. that only the second surface of the second substrate is dried.

Examples on methods for drying of the second substrate includes heating, e.g. by means of IR, microwaves, blowing with hot air, contact heating, and evaporation by means of vacuum etc. used separately or in combination.

A preferred method for partial drying, such as drying of a surface is IR heating. IR heating ensures an effective heating of the surface layer and allows the evaporated water steam to escape. The heating time for drying of a surface of a wooden substrate depends on the characteristics of the wooden substrate, such as density and moisture content, the temperature of the IR heat source, the distance to the heat source and the required surface temperature for the substrate. A high temperature ensures evaporation of water but a too high temperature may result in an unwanted carbonization of the outer surface layer. The preferred surface temperature of the substrate during the drying step may vary from about 50 to about 400 °C, more preferably from about 100 to about 300 °C, such as e.g. from about 125 to about 250 °C, such as from about 150 to about 200 °C.

To achieve an effective drying of a surface layer without fully drying the substrate completely, it is preferred that the drying time is relatively short, such as from about 10 seconds to about 30 minutes, preferably from about 15 seconds to about 10 minutes. A short drying time combined with a short time lag between drying and bringing the surfaced to be glued together, assures that only the surface layer is dried and that migration of humidity from the inner part of the substrate to equalize the humidity is minimized.

After full or partial drying of the second substrate, the surfaces are brought together and pressed to cure the adhesive to produce a water resistant glue line. The time between the drying step and the step of bringing the surfaced together and applying pressure, is not critical as long as the dried surface does not adsorb humidity from the surroundings, and from the rest of the substrate if only the surface is dried. Accordingly, the time allowed depends on the humidity of the surroundings and of the remaining substrate.

If heat is used for drying the substrate, it may be advantageous to bring the dried and hot surface together with the surface being provided with the adhesive before the heated surface is cooled. The heat will accelerate the hardening or setting of the adhesive as the glue line is heated by the hot surface.

After bringing the two surfaces together, the dry and optionally hot, adhesive free surface absorbs water from the glue resulting in a relatively rapid initial hardening giving an initial bonding so that the pressure may be removed and the glued product may be removed from the press. If the dry surface additionally is hot, the temperature of the glue line will rise compared with the surroundings which will accelerate the final hardening or setting.

A partial drying, such as drying of the surface layer of the substrate, and a few millimeters, such as from 0,05 to 3 mm, into the substrate additionally adds an additional feature. Removing humidity from or adding humidity to the product may cause problems in the dimension stability of the glued product and may result in the need for additional processing and/or conditioning of the product. By drying only a thin outer layer of a lamella and thereafter adding humidity in the form of water in the adhesive, the net addition or removal of water during the gluing process may be at least partly balanced. The total moisture content in the glued product is then close to the required or normal moisture content and the moisture may then be equalized through the product during the after curing or seasoning of the product after gluing without generation of unwanted stress and dimension instability.

It may also be preferred that the first substrate, preferably only the first surface thereof, is dried before the adhesive is applied to the first surface. The optional drying of the first substrate such as the first surface is preferably performed as indicated above with reference to drying of the second substrate and second surface. Drying of the first substrate, or preferably the first surface thereof, will add additional water absorption capacity to the wooden substrate at both sides of the glue line. Additionally, glue will be drawn into closer contact with the wooden surface during the absorption of water and may result in a more intimate contact between the glue and the first substrate to improve the gluing quality.

### Example 1- the effect of drying

Calculations are made for a typical water based emulsion adhesive, such as Prefere 6151/6651 from Dynea AS. This adhesive has a solids content of about 60 %, and consequently a water content of about 40%. The initial bonding is obtained when about 30 to 60 % of this water has been withdrawn from a glue line. Application of 150 g/m² of an adhesive with a solids content of 60 % correspond to 60 g/m² of water. To give an initial bonding, 18 to 36 g/m² of water has to be removed from the glue line.

Drying of a surface layer of 1 mm of a lamella having an initial humidity of 12 % to a humitity of 0% results in a removal of 47 g/m² of water. Accordingly, the water needed to result in an initial bonding corresponds to the water needed to reinstate the initial humidity in a depth of about 0.4 to about 0,8 mm of the lamella.

To verify the theory, test lamellas having the dimensions 20 x 150 x 400 mm were provided. The lamellas were divided into two groups. A first group of lamellas were dried by means of heat to a humidity of 3% and thereafter cooled to 20 °C. A second group of lamellas were kept at 20 °C and a humidity of 12 %.

Three gluing tests were performed as indicated in table 1, below. Immediately after application of the adhesive at 150 g/m², the lamellas were brought in contact and pressed for 3 minutes at 20 °C. The normal required / recommended pressing time for this adhesive for gluing of wooden lamellas having a humidity of 12% is about 30 minutes.

Immediately after gluing the quality of the glue line was tested by means of a chisel test, i.e. by forcing a chisel into the glue line to cause a delamination of the glued product. The surface of fracture was visually inspected and the percent wood failure versus glue failure was estimated. A high value for wood fracture indicates a good gluing quality.

**Table 1 - Test results**

| **Sample** | **Press time** | **Results** | **Delamination test according to EN-302** |
|---|---|---|---|
| Drying of both lamellas to <3% M.C | 3 min | 90-100 % wood failure, good gluing | 0% |
| Drying of one lamella to <3% M.C, the other lamella 12% M.C | 3 min | 50% wood failure, good gluing | 0% |
| Control: Gluing of two 12% M.C lamellas | 3 min | 0% wood failure, not gluing | 65% |

The best gluing results was achieved for the test sample using two dried lamellas. The results for the test sample comprising a dried and a un-dried lamella, where the adhesive was applied to an un-dried lamella, showed good gluing even if the wood failure was lower. The control sample, i.e. gluing of two un-dried lamellas gave no gluing, as expected.

The results from table 1 clearly illustrates that drying of one or both of the lamellas resulted in substantially shorter required pressing time than expected for lamellas at a humidity of 12% at 20 °C. Both test samples were at least one of the two lamellas were dried to a humidity of about 3% gave good gluing, after 3 minutes pressing time, for an adhesive system normally requiring a pressing time of 30 minutes.

### Example 2

A laboratory test was performed using a fast curing EPI adhesive, Prefere 6151/6651 from Dynea AS. The tested adhesive system requires a pressing time of 30 minutes at 20 °C and 12 % humidity in the wooden substrate. The adhesive was applied to a surface of one lamella, having the dimensions 30 x 150 x 400 mm, at a glue spread as indicated in the table. The quality of gluing was tested both after gluing according to WO2004/104123 and according to the present invention by drying the surface of the other substrate by means heat. The heat was applied by means of an IR lamp having a distance of 2 cm to the substrate. The substrate was heated in intervals of 7 seconds. The quality of gluing was tested by means of the chisel test immediately after gluing, and the results are illustrated in table2 below.

**Table 2**

| **Sample** | **Glue spread: [g/m²]** | **Heating time [s]** | **Pressing time: [min]** | **Wood failuire:** | **Delamination according to EN-302-2** | **Comments:** |
|---|---|---|---|---|---|---|
| Heating of the glue line ⁺ | 175 | 7 | 3 | 60% | 17,4% | |
| Heating of the glue line ⁺ | 175 | 7 | 3 | 95% | 2,4% | |
| Drying of the opposite surface ⁺⁺ | 175 | 28 | 3 | 85% | 0% | |
| Drying of the opposite surface ⁺⁺ | 150 | 28 | 3 | 100% | 0% | |

| | | | | | | |
|---|---|---|---|---|---|---|
| ⁺ Heating and partial drying of the applied glue according to WO2004/104123. ⁺⁺ Heating and drying of the non-applied surface according to the present invention | | | | | | |

Heating of the glue line according to WO2004/104123 resulted in varying quality of gluing, as illustrated in table 2. Small variations in glue spread, temperature, IR heat time and in time between heating and pressing the lamellas together, resulted in varying results / quality of gluing. The present method by drying of the opposite surface, gave better and more even results making the method better suited for an industrial process.

## Claims

1. A method of joining a first and a second substrate of wood based materials, the method comprises the steps of:
i) applying a water based adhesive composition onto a first surface of said first substrate,
ii) drying a surface layer of a second surface of the second substrate,
iii) bringing together the first surface and the second surface, and thereafter
iv) pressing the two surfaces against each other until an initial bonding is established,
where steps i) and ii) are performed before steps iii) and iv),
wherein a surface layer of said surface of the second substrate having a thickness of 0,05 to 3 mm is dried to a moisture content of less than 3 % before the surfaces are brought together in step iii).

2. The method according to claim 1, wherein the moisture content at surface of said second surface is below 1% before said first and second surfaces are brought together..

3. The method according to claim 1 or 2, wherein the first substrate is dried before application of adhesive.

4. The method according to claim 3, wherein the moisture content at the surface of said first surface is below 3 % and most preferably below 1 % before the adhesive is applied to said first surface.

5. The method according any of the preceding claims, wherein substrate(s) is (are) dried for a time from about 10 seconds to about 30 minutes, more preferably from about 20 seconds to about 10 minutes.

6. The method according to any of the preceding claims, wherein the substrate(s) is (are) dried by means of heat.

7. The method according to claim 6, wherein said surface(s) is (are) dried by heating to a temperature of 50 to about 400 °C.

8. The method of claim 7, wherein said surface(s) is (are) dried at about 100 to about 300 °C.

9. The method of claim 8, wherein said surface(s) is (are) dried at about 125 to about 250 °C.

10. The method of claim 9, wherein said surface(s) is (are) dried at about 150 to about 200 °C.

11. A method according to any of the claims 7 to 10, wherein said surface(s) is (are) heated by means of one or more IR lamp(s).

## Patentansprüche

1. Verbindungsverfahren eines ersten und eines zweiten Substrats aus Holzwerkstoffen, wobei das Verfahren die folgenden Schritte umfasst:
i) Applizieren einer wasserbasierenden Klebstoffmischung auf eine erste Oberfläche des ersten Substrats,
ii) Trocknen einer Oberflächenschicht einer zweiten Oberfläche des zweiten Substrats,
iii) Zusammenbringen der ersten Oberfläche und der zweiten Oberfläche, und danach
iv) Gegeneinanderdrücken der zwei Oberflächen bis eine Anfangsbindung hergestellt ist,
wobei die Schritte i) und ii) vor den Schritten iii) und iv) durchgeführt werden,
wobei eine Oberflächenschicht der zweiten Oberfläche des zweiten Substrats, welche eine Dicke von 0,05 bis 3 mm aufweist, auf einen Feuchtigkeitsgehalt von weniger als 3% getrocknet wird, bevor die Oberflächen in Schritt iii) zusammengebracht werden.

2. Verfahren nach Anspruch 1, wobei der Feuchtigkeitsgehalt auf der Oberfläche der zweiten Oberfläche unter 1% liegt, bevor die erste und die zweite Oberfläche zusammengebracht werden.

3. Verfahren nach Anspruch 1 oder 2, wobei das erste Substrat vor dem Applizieren des Klebstoffs getrocknet wird.

4. Verfahren nach Anspruch 3, wobei der Feuchtigkeitsgehalt auf der Oberfläche der ersten Oberfläche unter 3% und vorzugsweise unter 1% liegt, bevor der Klebstoff auf die erste Oberfläche appliziert wird.

5. Verfahren nach einem der vorhergehenden Ansprüche, wobei das(die) Substrat(e) für eine Dauer von etwa 10 Sekunden bis etwa 30 Minuten getrocknet wird(werden), vorzugsweise von etwa 20 Sekunden bis etwa 10 Minuten.

6. Verfahren nach einem der vorhergehenden Ansprüche, wobei das(die) Substrat(e) mittels Hitze getrocknet wird(werden).

7. Verfahren nach Anspruch 6, wobei das(die) Oberfläche(n) durch Erhitzen auf eine Temperatur von 50 bis etwa 400°C getrocknet wird(werden).

8. Verfahren nach Anspruch 7, wobei die Oberfläche(n) bei etwa 100 bis etwa 300°C getrocknet wird(werden).

9. Verfahren nach Anspruch 8, wobei die Oberfläche(n) bei etwa 125 bis etwa 250°C getrocknet wird(werden).

10. Verfahren nach Anspruch 9, wobei die Oberfläche(n) bei etwa 150 bis etwa 200°C getrocknet wird(werden).

11. Verfahren nach einem der Ansprüche 7 bis 10, wobei die Oberfläche(n) mittels einer oder mehrerer IR-Lampe(n) aufgeheizt wird(werden).

## Revendications

1. Procédé pour relier un premier et un second substrats de matériaux à base de bois, le procédé comprenant les étapes consistant à :
i) appliquer une composition adhésive à base d'eau sur une première surface dudit premier substrat,
ii) sécher une couche d'une seconde surface du second substrat,
iii) réunir la première surface et la seconde surface, et par la suite
iv) appuyer les deux surfaces l'une contre l'autre jusqu'à ce qu'une liaison initiale soit établie,
où les étapes i) et ii) étant effectuées avant les étapes iii) et iv),
dans lequel une couche de surface de ladite seconde surface du second substrat ayant une épaisseur comprise entre 0,05 et 3 mm est séchée à une teneur en humidité inférieure à 3 % avant que les surfaces ne soient réunies à l'étape iii).

2. Procédé selon la revendication 1, dans lequel la teneur en humidité au niveau de la surface de ladite seconde surface est inférieure à 1 % avant que lesdites première et seconde surfaces ne soient réunies.

3. Procédé selon la revendication 1 ou 2, dans lequel le premier substrat est séché avant l'application d'un adhésif.

4. Procédé selon la revendication 3, dans lequel la teneur en humidité au niveau de la surface de ladite première surface est inférieure à 3 % et, de la manière la plus préférée, inférieure à 1 % avant que l'adhésif ne soit appliqué sur ladite première surface.

5. Procédé selon l'une quelconque des revendications précédentes, dans lequel le ou les substrat(s) est (sont) séché(s) pendant une durée d'environ 10 secondes à environ 30 minutes, de préférence d'environ 20 secondes à environ 10 minutes.

6. Procédé selon l'une quelconque des revendications précédentes, dans lequel le ou les substrat(s) est (sont) séché(s) par l'intermédiaire de chaleur.

7. Procédé selon la revendication 6, dans lequel ladite (lesdites) surface(s) est (sont) séchée(s) par chauffage à une température comprise entre 50 et environ 400°C.

8. Procédé selon la revendication 7, dans lequel ladite (lesdites) surface(s) est (sont) séchée(s) à une température comprise entre environ 100 et 300°C.

9. Procédé selon la revendication 8, dans lequel ladite (lesdites) surface(s) est (sont) séchée(s) à une température comprise entre environ 25 et 250°C.

10. Procédé selon la revendication 9, dans lequel ladite (lesdites) surface(s) est (sont) séchée(s) à une température comprise entre environ 150 et 200°C.

11. Procédé selon l'une quelconque des revendications 7 à 10, dans lequel ladite (lesdites) surface(s) est (sont) chauffée(s) par l'intermédiaire d'une ou plusieurs lampes IR.
